# EUROPÄISCHE PATENTSCHRIFT

(11) **EP 3 149 439 B1**
(45) Veröffentlichungstag und Bekanntmachung des Hinweises auf die Patenterteilung: **30.10.2019**
(21) Anmeldenummer: 15727367.3
(22) Anmeldetag: 01.06.2015
(51) Int. Cl.: B25J 13/08, G01L 3/10, G01L 5/22, G01L 5/16

(54) **DREHMOMENTSENSOR UND VERFAHREN ZUM ERFASSEN VON AN ODER IN EINEM GELENK EINES GELENKARMROBOTERS AUFTRETENDEN DREHMOMENTEN**
TORQUE SENSOR AND METHOD FOR DETECTING TORQUES OCCURRING ON OR IN A JOINT OF AN ARTICULATED ARM ROBOT
CAPTEUR DE COUPLE ET PROCÉDÉ POUR DÉTECTER DES COUPLES S'EXERÇANT SUR UNE ARTICULATION D'UN ROBOT À BRAS ARTICULÉ OU DANS CETTE ARTICULATION

(30) Priorität: 02.06.2014 DE 102014210379
(43) Veröffentlichungstag der Anmeldung: 05.04.2017
(73) Patentinhaber: KUKA Deutschland GmbH, 86165 Augsburg (DE)
(72) Erfinder: NITZ, Gernot, 86163 Augsburg (DE); TSCHARNUTER, Dietmar, 86316 Friedberg/Stätzling (DE)
(74) Vertreter: Mader, Joachim
(86) Internationale Anmeldenummer: PCT/EP2015/062128
(87) Internationale Veröffentlichungsnummer: WO 2015/185494

(56) Entgegenhaltungen:
- EP-A1- 1 688 725
- EP-A2- 0 168 998
- WO-A1-2010/066296
- WO-A1-2010/088922
- DD-A7- 281 727
- US-A- 4 448 083

## Beschreibung

### 1. Gebiet der Erfindung

Die vorliegende Erfindung betrifft einen Sensor zum Erfassen von Drehmomenten, insbesondere von an oder in einem Gelenk eines Gelenkarmroboters auftretenden Drehmomenten, sowie ein entsprechendes Verfahren und ein damit ausgerüsteter Roboter.

### 2. Hintergrund

Roboter, wie zum Beispiel Gelenkarmroboter, die in unterschiedlichen industriellen Gebieten zum Einsatz kommen können, haben entsprechend dem vorgesehenen Anwendungsgebiet mehrere über Gelenke bewegliche Glieder, die unterschiedlich angeordnet sein können. Ein wichtiger Bestandteil dieser Roboter sind Drehmomentsensoren zum Erfassen der Drehmomente der beweglichen Glieder. In den meisten Fällen sind diese Drehmomentsensoren in oder an allen beweglichen Gliedern des Roboters verbaut.

Zur Erfassung von Drehmomenten sind aus dem Stand der Technik verschiedene Systeme bekannt. WO 2009/083111 beschreibt beispielsweise ein System zur Drehmomenterfassung, das Dehnungsmessstreifen verwendet. Diese Dehnungsmessstreifen sind zur Auswertung in zwei Wheatstone-Brücken (Wheatstone'sche Messbrücke oder Brückenschaltung) verschaltet. Die Widerstände von jeweils zwei Dehnungsmessstreifen sind an zwei unterschiedlichen Stellen eines mit dem beweglichen Glied in Verbindung stehenden Bauteils angeordnet und zu jeweils einer Halbbrücke verschaltet. Diese beiden Halbbrücken bilden jeweils eine Brückenschaltung. Eine weitere Brückenschaltung wird durch die Widerstände von zwei weiteren Dehnungsmessstreifen gebildet, die an zwei weiteren unterschiedlichen Stellen des Bauteils angeordnet sind. Durch die redundante Ausführung der Dehnungsmessstreifen werden zwei Drehmomentwerte erfasst. Zur Sicherstellung der Funktionsweise vergleicht eine Vergleichseinrichtung die von den beiden Brückenschaltungen ausgegebenen Signale des gleichen Moments und schaltet den Roboter ab, wenn sich die beiden Signale über einen bestimmten Toleranzbereich hinaus unterscheiden.

Das Dokument EP 0 168 998 A2 beschreibt einen Messgeber, mit dem Kräfte oder eine Last gemessen werden kann. Der Messgeber umfasst dabei Speichen und Spannungsprüfer.

Die WO 2010/066296 A1 betrifft einen Verformungskörper für einen Kraft-Moment-Sensor mit einer Leiterplatte, die wenigstens eine erste Dehnmessstruktur in Form einer ersten Leiterbahn und wenigstens eine zweite Dehnmessstruktur in Form einer zweiten Leiterbahn umfasst.

Die EP 1688 725 A1 betrifft eine Sensoreinheit mit acht Dehnmessstreifen, die in einer einzelnen Ebene angeordnet sind.

Die WO 2010/088922 A1 betrifft eine Anordnung mit zumindest zwei Sensoren, welche jeweils aus zwei Messstreifen bestehen, welche in einem bestimmten Winkel und Abstand relativ zueinander angeordnet sind.

Das Dokument US 4,448,083 betrifft eine Vorrichtung zum Messen von Kraft- und Momentkomponenten entlang und um drei orthogonale Achsen herum.

Die Patentschrift DD 281 727 A7 betrifft eine Vorrichtung zur Messung von Kräften und Drehmomenten. Dabei werden sechs Dehnungsmessstreifen-Brücken an bestimmten Orten zweier sich kreuzender Balken vorgeschlagen.

Die im Stand der Technik bekannten Systeme zur Drehmomenterfassung und Verfahren haben allerdings den Nachteil, dass eine Verformung des Dehnungsmessstreifens abseits der Drehmomentbelastung, die beispielsweise durch Stauchungen des Dehnungsmessstreifens aufgrund von Querkräften, Axialkräften und Biegemomenten hervorgerufen werden können, zu unterschiedlichen Signalen führen kann, obwohl kein Fehler vorliegt. Unterschiedliche Signale bewirken eine Messungenauigkeit und diese Abweichung kann, wenn ein bestimmter Grenzwert überschritten wird, zu einer Notabschaltung des Roboters führen, ohne dass eine Veranlassung hierfür gegeben ist.

Die Aufgabe der vorliegenden Erfindung ist daher, einen Sensor und ein entsprechendes Verfahren bereitzustellen, bei dem die oben genannten Nachteile vermieden werden können und womit eine genauere und weniger fehleranfällige Erfassung von Drehmomenten möglich ist. Eine weitere Aufgabe ist es einen entsprechend verbesserten Roboter bereitzustellen.

Diese Aufgaben werden erfindungsgemäß durch das System gemäß Anspruch 1, das Verfahren zum Erfassen eines Drehmoments gemäß Anspruch 7 und einen Roboter gemäß Anspruch 8 gelöst.

### 3. Ausführliche Beschreibung der Erfindung

Der erfindungsgemäße Drehmomentsensor, der insbesondere zum Erfassen von an oder in einem Gelenk eines Gelenkarmroboters auftretenden Drehmomenten dient, weist mehrere Messspeichen auf, die ausgestaltet sind sich unter Einwirkung eines Drehmomentes zu verformen.

Ein Drehmomentsensor dieses Typs ist in der DE 36 05 964 A1 beschrieben und umfasst z.B. ein Speichenrad mit Außenring, Innenring bzw. Nabe und mehreren, biegeelastischen Speichen (Messspeichen), die Außenring und Nabe verbinden. Die Messspeichen werden bei einer Drehmomentbelastung an der einen Seite gedehnt und an jener der gleichen Messspeiche gegenüberliegenden Seite gestaucht. Ein Drehmomentsensor kann beispielsweise, wie es in DE 36 05 964 A1 gezeigt ist, aus einem mittleren Nabenteil und einem äußeren Rand bestehen, die mittels vier um 90° versetzter Messspeichen miteinander verbunden sind (d.h. die Messspeichen sind im gleichen Winkel um die Nabe angeordnet). Es ist aber beispielsweise auch möglich, dass mehr oder weniger Messspeichen verwendet werden.

Erfindungsgemäß weist der Drehmomentsensor mehrere Dehnungsmessstreifen auf.

Jeweils zwei Dehnungsmessstreifen werden an bzw. auf zwei gegenüberliegenden Seiten einer Messspeiche derart angeordnet, dass eine Seite der Messspeiche unter Einwirkung des Drehmoments gedehnt wird, wohingegen die gegenüberliegende Seite gestaucht wird.

Mit Hilfe der Dehnungsmessstreifen kann durch eine Formänderung der Messspeichen das Drehmoment ermittelt werden. Vorteilhaft verändern Dehnungsmessstreifen schon bei einer geringen Dehnung, bzw. Stauchung ihren Widerstandswert. Beispielsweise können diese Dehnungsmessstreifen auf die Messspeichen geklebt werden, um somit gemeinsam mit den Messspeichen verformbar zu sein. Beispielsweise besteht der Dehnungsmessstreifen aus einer mäanderförmigen Anordnung eines Widerstandsdrahts. Die Anordnung kann auch aus Halbleitern bestehen, so dass eine Volumenänderung der Anordnung eine Änderung in dem spezifischen Widerstand des Dehnungsmessstreifens bewirkt.

Erfindungsgemäß sind die mehreren Dehnungsmessstreifen jeweils in einer von mindestens zwei Brückenschaltungen verschaltet. Diese Brückenschaltungen sind bevorzugt als Wheatstone Brückenschaltung ausgestaltet, die aus zwei parallelen Spannungsteilern besteht, so dass jeweils ein Spannungsteiler eine Halbbrücke bildet. Die Spannungsteiler werden jeweils durch zwei in Reihe angeordnete Widerstände gebildet. Das Ausgangssignal der Brückenschaltung wird als Brückenspannung bezeichnet. Die Brückenspannung ist der Spannungsunterschied, der zwischen den beiden Spannungsteilern in der Brückenschaltung gemessen wird. Da sich die Messpunkte für die Messung der Brückenspannung jeweils zwischen den beiden Widerständen in den beiden Spannungsteilern befinden, wird die Brückenspannung oftmals auch als Querspannung bezeichnet. Idealerweise befindet sich der Abgriff jeweils genau zwischen den zwei Widerständen in den Spannungsteilern. Wenn alle Widerstände z.B. den gleichen Wert haben, gilt die Brücke als abgeglichen. Das bedeutet, dass der Spannungsunterschied zwischen den beiden Spannungsteilern 0 V beträgt. Falls sich die Widerstände in den einzelnen Spannungsteilern unterschiedlich ändern, gilt die Brücke als nicht abgeglichen und eine Brückenspannung kann gemessen werden.

Die Dehnungsmessstreifen bilden in der Brückenschaltung variable Widerstände. Die Widerstandsänderungen benachbarter Dehnungsmessstreifen einer Brückenschaltung wirken sich in entgegengesetzter Weise auf die Brückenspannung aus. Entsprechend wirken sich die Widerstandsänderungen gegenüberliegender Dehnungsmessstreifen in gleicher Weise auf die Brückenspannung aus.

Erfindungsgemäß sind in jeder der mindestens zwei Brückenschaltungen mindestens drei Dehnungsmessstreifen auf jeweils unterschiedlichen Messspeichen angeordnet. Bei der Brückenschaltung handelt es sich vorzugsweise um eine Vollbrücke. Aus Sicherheitsgründen wird die Drehmomentmessung mittels zwei Brückenschaltungen durchgeführt. Somit stellt jede Brückenschaltung ein Signal bereit, über welches sich das momentane Drehmoment ermitteln lässt. Wenn beide Signale identisch sind, können Fehler im Messsystem ausgeschlossen werden.

Im Rahmen der Erfindung wurde überraschenderweise festgestellt, dass das Drehmoment besonders sicher bestimmt werden kann, wenn Dehnungsmessstreifen, die an einer Messspeiche angeordnet sind, in unterschiedlichen Brückenschaltungen verschaltet sind. Vorteilhaft werden somit Störeinflüsse, die Verformungen verursachen, von den unterschiedlichen Dehnungsmessstreifen in der Brückenschaltung kompensiert, wobei mindestens einer gestaucht wird und ein mindestens anderer gedehnt wird. Somit werden die Störeinflüsse in der Messspannung nicht sichtbar. Erfindungsgemäß weist deshalb jede der mindestens zwei Brückenschaltungen mindestens drei Dehnungsmessstreifen auf, die auf unterschiedlichen Messspeichen des Drehmomentsensors angeordnet sind. Daher kann der Vergleich der Brückenspannungen innerhalb eines geringen Toleranzbereichs stattfinden.

Erfindungsgemäß weist jede der mindestens zwei Brückenschaltungen eine Brückenspannung auf und ein sicheres Signal wird aus einem Kreuzvergleich der Brückenspannungen der beiden Brückenschaltungen gebildet. Dieses sichere Signal zeigt an, dass die beiden Brückenschaltungen, die jeweils unabhängig voneinander ein Drehmomentsignal bereitstellen, fehlerfrei arbeiten. Der Kreuzvergleich wird aus einem direkten Vergleich der beiden Brückenspannungen gebildet. Vorteilhaft ermöglicht dies eine effiziente Kontrolle der Funktion beider redundanter Signale, um somit bei einer Abweichung der Signale über eine festgelegte Toleranz hinaus einen Fehler festzustellen können. In der Praxis kann dieser Vergleich beispielsweise durch eine Differenzbildung der beiden Signale erfolgen. Alternativ, wenn eine Brückenschaltung angepasst ist eine positive Spannung zu liefern und die andere Brücke angepasst ist eine negative Spannung zu liefern, kann dies auch durch Addition der beiden Signale erfolgen. Im Normalfall sollte das Ergebnis des Vergleichs 0 V betragen.

In einer bevorzugten Ausführungsform sind alle vier Dehnungsmessstreifen, die in jeder Brückenschaltung verschaltet sind, auf unterschiedlichen Speichen des Drehmomentsensors angeordnet. Vorteilhaft kann so eine Verformung der Messspeichen abseits der Drehmomentbelastung, wie es bereits oben beschrieben wurde durch Stauchung der Messspeichen, sowie an der inneren Messnabe angreifende Querkräfte, Axialkräfte oder Biegemomente ausgeglichen werden, da Dehnungsmessstreifen auf jeder Messspeiche in jeder Brückenschaltung verschaltet sind.

In einer weiteren bevorzugten Ausführungsform werden zwei Dehnungsmessstreifen auf benachbarten Messspeichen in einer ersten Halbbrücke verschaltet sind und zwei Dehnungsmessstreifen auf anderen benachbarten Messspeichen in einer zweiten Halbbrücke verschaltet.

Somit wird sichergestellt, dass sich auf allen vier Messspeichen jeweils ein Dehnungsmessstreifen befindet. Vorteilhaft ermöglicht eine solche Verteilung auch, dass alle vier Dehnungsmessstreifen in jeder Brückenschaltung auf unterschiedlichen Messspeichen des Drehmomentsensors angeordnet werden können.

In einer Ausführungsform sind zwei Dehnungsmessstreifen auf gegenüberliegenden Messspeichen jeweils zu einer Halbbrücke verschaltet und zwei Dehnungsmessstreifen auf anderen gegenüberliegenden Messspeichen jeweils zu einer zweiten Halbbrücke verschaltet. Diese Ausführungsform gewährleistet, alternativ zu der vorherigen Ausführungsform, auch eine gleichmäßige Verteilung von vier Dehnungsmessstreifen in jeder Brückenschaltung auf unterschiedlichen Speichen des Drehmomentsensors.

In einer weiteren Ausführungsform sind zwei Dehnungsmesstreifen auf benachbarten Messspeichen in einer ersten Halbbrücke verschaltet und zwei Dehnungsmessstreifen auf benachbarten Messspeichen sind in einer zweiten Halbbrücke verschaltet, wobei ein Dehnungsmessstreifen der ersten Halbbrücke und ein Dehnungsmessstreifen der zweiten Halbbrücke auf derselben Messspeiche angeordnet sind und die beiden anderen Dehnungsmessstreifen auf davon unterschiedlichen Messspeichen angeordnet sind.

Erfindungsgemäß, umfasst der Drehmomentsensor ein Speichenrad mit Außenring, Innenring bzw. Nabe, und Messspeichen, insbesondere mehreren biegeelastischen Messspeichen, die Außenring und Nabe verbinden. Der Außenring und der Innenring kann jede geeignete Geometrie aufweisen, beispielsweise können beide kreisförmig oder quadratisch sein. Erfindungsgemäß weist der Drehmomentsensor genau drei oder genau vier Messspeichen auf, die im gleichen Winkel um den Innenring bzw. die Nabe angeordnet sind, d.h. bei vier Speichen um 90° versetzt und bei drei Speichen jeweils um 120° versetzt.

Das erfindungsgemäße Verfahren zum Erfassen von Drehmomenten mit einem Drehmomentsensor, insbesondere von an oder in einem Gelenk eines Gelenkarmroboters auftretenden Drehmomenten, weist die folgenden Schritte auf:
Zunächst wird ein Drehmoment gemessen mit Hilfe von Dehnungsmessstreifen an mehreren Messspeichen eines Drehmomentsensors, wie er oben beschrieben wurde, und wobei jeweils zwei Dehnungsmessstreifen an gegenüberliegenden Seiten von einer der mehreren Messspeichen angeordnet sind.

Danach werden die von den Dehnungsmessstreifen bereitgestellten Signale mit Hilfe von mindestens zwei Brückenschaltungen ausgewertet, wobei in jeder der mindestens zwei Brückenschaltungen mindestens drei Dehnungsmessstreifen verschaltet sind, die auf unterschiedlichen Messspeichen angeordnet sind.

Die Erfindung betrifft außerdem einen Gelenkarmroboter mit mindestens einem Roboterarm, der über ein Gelenk beweglich an einem anderen Bauteil des Roboters angeordnet ist, und der den oben beschriebenen Drehmomentsensor verwendet, um einen besonders sicheren und genauen Betrieb zu erlauben. Der erfindungsgemäß ausgestaltete Drehmomentsensor wird hierzu in an sich bekannter Weise an oder in dem Gelenk angeordnet.

### 4. Beschreibung von bevorzugten Ausführungsformen

Im Folgenden werden der erfindungsgemäße Sensor zum Erfassen von Drehmomenten, insbesondere von an oder in einem Gelenk eines Gelenkarmroboters auftretenden Drehmomenten, sowie ein entsprechendes Verfahren und ein damit ausgerüsteter Roboter beispielhaft anhand der in den nachfolgenden Figuren gezeigten beispielhaften Ausführungsformen näher erläutert. Es zeigen:
- Fig. 1a:: eine Ansicht einer schematischen Darstellung von Messspeichen mit daran angeordneten Dehnungsmessstreifen gemäß einer ersten Ausführungsform,
- Fig. 1b, Fig. 1c:: die Verschaltung der Widerstände der Dehnungsmessstreifen in zwei Brückenschaltungen gemäß der in Fig. 1a gezeigten ersten Ausführungsform,
- Fig. 2a:: eine Ansicht einer schematischen Darstellung von Messspeichen mit daran angeordneten Dehnungsmessstreifen gemäß einer zweiten Ausführungsform,
- Fig. 2b, Fig. 2c:: die Verschaltung der Widerstände der Dehnungsmessstreifen in zwei Brückenschaltungen gemäß der in Fig. 2a gezeigten zweiten Ausführungsform,
- Fig. 3a:: eine Ansicht einer schematischen Darstellung von Messspeichen mit daran angeordneten Dehnungsmessstreifen gemäß einer dritten Ausführungsform, und
- Fig. 3b, Fig. 3c:: die Verschaltung der Widerstände der Dehnungsmessstreifen in zwei Brückenschaltungen gemäß der in Fig. 3a gezeigten dritten Ausführungsform.

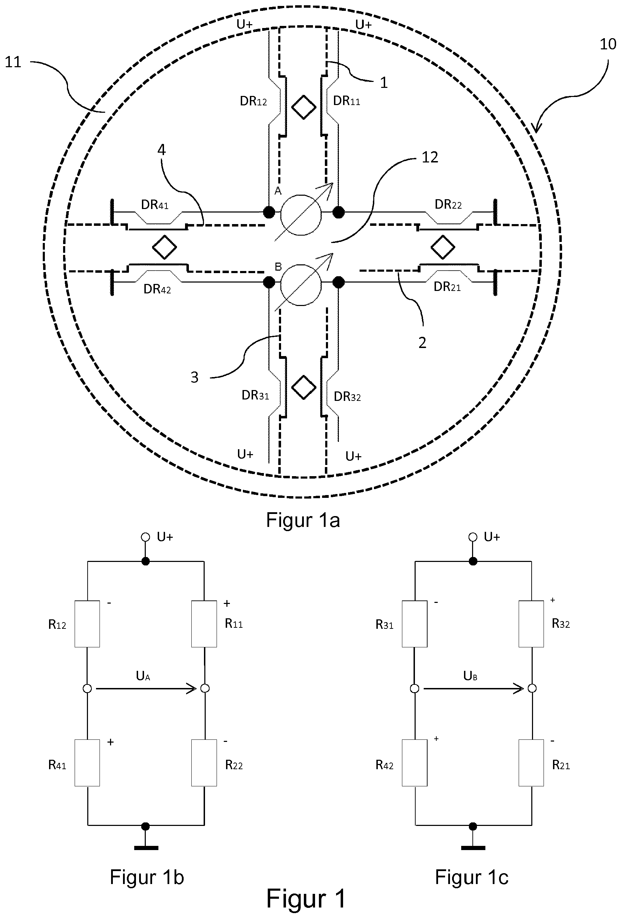

Die Figuren 1a, 2a, 3a zeigen jeweils eine Ansicht einer schematischen Darstellung von vier Speichen (Messspeichen) 1, 2, 3, 4 mit daran angeordneten Dehnungsmessstreifen DR11, DR12, DR21, DR22, DR31, DR32, DR41, DR42, wobei die Dehnungsmessstreifen zu zwei Brückenschaltungen verschaltet sind. Die Messspeichen bilden Teil eines Drehmomentsensors 10, der in der dargestellten Ausführungsform über einen Außenring 11 und einen Innenring bzw. Nabe (Messnabe) 12 verfügt, die über die Messspeichen verbunden sind. Die räumliche Ausgestaltung des Drehmomentsensors 10 ist in den Figuren nur rein schematisch durch die gestrichelten Linien angedeutet, da seine genaue Ausgestaltung für die vorliegende Erfindung nicht relevant ist. Der grundlegende Aufbau derartiger Drehmomentsensoren ist dem Fachmann darüber hinaus geläufig, wie etwa aus der eingangs erwähnten DE 36 05 964 A1, so dass auf eine detaillierte Beschreibung hierin verzichtet wird. Die Figuren zeigen außerdem Messgeräte A, B zur Bestimmung der Brückenspannungen in den jeweiligen Brückenschaltungen. In den gezeigten Ausführungsformen ist eine Brückenschaltung angepasst eine positive Spannung zu liefern und die andere Brückenschaltung angepasst eine negative Spannung zu liefern, so dass im Normalfall das Ergebnis des Vergleichs der beiden Brückenspannungen 0 V beträgt. Alternativ hierzu können beide Brückenschaltungen auch eine positive oder beide eine negative Spannung liefern.

In den in den Figuren 1a, 2a, 3a gezeigten Ausführungsformen sind vier Messspeichen 1, 2, 3, 4 vorgesehen. Die Messspeichen sind in diesen Ausführungsformen jeweils um ca. 90° versetzt, d.h. im gleichen Winkel um die Nabe 12 herum angeordnet. Im Betrieb verformen sich die Messspeichen 1, 2, 3, 4 aufgrund von Einwirkung einer externen Beanspruchung, beispielsweise eines Drehmoments, elastisch. In der in den Figuren 1a, 2a, 3a gezeigten Ausführungsformen können sich in den Messspeichen auch jeweils Öffnungen befinden, die zur Herstellung einer Verformungszone dienen.

Die Beanspruchung kann beispielsweise über den Außenring 11 eingeleitet werden, wobei die Nabe 12 fixiert ist, oder umgekehrt. In Abhängigkeit von der einwirkenden Belastung verformen sich die Messspeichen unterschiedlich stark. In den vorliegenden Ausführungsbeispielen werden Dehnungsmessstreifen DR11, DR12, DR21, DR22, DR31, DR32, DR41, DR42 verwendet. Diese sind auf den Messspeichen, beispielsweise durch eine Klebeverbindung, befestigt, so dass sich die Dehnungsmessstreifen DR11, DR12, DR21, DR22, DR31, DR32, DR41, DR42 analog zu/mit den Messspeichen 1, 2, 3, 4 verformen. Die Dehnungsmesstreifen zeigen diese Verformung als Änderung ihres elektrischen Widerstands R11, R12, R21, R22, R31, R32, R41, R42 an. Üblicherweise bestehen die Dehnungsmessstreifen aus Widerstandsdraht, der sich auf einem dünnen Trägerelement, das beispielsweise aus Kunststoff besteht, befindet. Der Nennwiderstand, also der Widerstand des Dehnungsmessstreifens ohne Belastung, liegt typischerweise zwischen 100 Ω und 1000 Ω.

In den gezeigten Ausführungsformen sind jeweils zwei Dehnungsmessstreifen an gegenüberliegenden Seiten einer Messspeiche angebracht. Zum Beispiel ist an Messspeiche 1 Dehnungsmesstreifen DR12 an einer Seite der Messspeiche angeordnet, wohingegen Dehnungsmesstreifen DR11 an der gegenüberliegenden Seite der Messspeiche angeordnet ist. Somit wird ein Dehnungsmessstreifen an der einen Messspeichenseite bei einem Drehmoment gedehnt, wohingegen der Dehnungsmessstreifen an der gegenüberliegenden Messspeichenseite gestaucht wird. Diese gegensätzliche Stauchung/Dehnung hat auch eine gegensätzliche Änderung des jeweiligen Widerstandswerts zur Folge. Zum besseren Verständnis sind die Auswirkungen der Widerstandsänderungen auf die Messspannung bei Stauchung/Dehnung in den Figuren mit +/- in den jeweiligen Schaltungen gezeigt.

In der in Figur 1a gezeigten ersten Ausführungsform sind für eine Brückenschaltung die Dehnungsmessstreifen DR11, DR22 auf benachbarten Messspeichen 1, 2 in einer ersten Halbbrücke verschaltet und die Dehnungsmessstreifen DR12, DR41 auf benachbarten Messspeichen 1, 4 in einer zweiten Halbbrücke verschaltet, wobei ein Dehnungsmessstreifen DR11 der ersten Halbbrücke und ein Dehnmessstreifen DR12 der zweiten Halbbrücke auf derselben Messspeiche 1 angeordnet sind und die beiden anderen Dehnungsmessstreifen DR22, DR41 auf davon unterschiedlichen Messspeichen 2, 4 angeordnet sind.

In den Figuren 1b und 1c ist die Verschaltung der Widerstände der Dehnungsmessstreifen in den Brückenschaltungen gemäß der in Figur 1a gezeigten ersten Ausführungsform dargestellt.

In Figur 1b ist die erste Brückenschaltung gezeigt, welche die erste Brückenspannung U_{A} für einen Kreuzvergleich der Brückenspannungen U_{A}, U_{B} liefert. Wie es in Figur 1a gezeigt wird, sind für diese Brückenschaltung drei Dehnungsmessstreifen auf jeweils unterschiedlichen Messspeichen angeordnet. Wie in dem Beispiel gezeigt, sind DR12 und DR11 auf gegenüberliegenden Seiten von Messspeiche 1 angeordnet, wohingegen DR41 auf Messspeiche 4 angeordnet ist und DR22 auf Messspeiche 2 angeordnet ist. Eine Halbbrücke wird aus DR11 auf Messspeiche 1 mit DR22 auf Messspeiche 2 gebildet, wobei DR22 auf der Seite von Messspeiche 2 angeordnet ist, die der Seite von Messspeiche 1 an der DR11 angeordnet ist gegenüberliegt. Mit anderen Worten, DR11 und DR22 sind auf benachbarten Messspeichen angeordnet und zwar auf gegenüberliegenden Seiten der benachbarten Messspeichen. Analog gilt dies für DR12 und DR41.

Figur 1c zeigt die Verschaltung der zweiten Brückenschaltung, welche die zweite Brückenspannung U_{B} für den Kreuzvergleich mit der Brückenspannung der ersten Brückenschaltung U_{A} liefert. Die Verschaltung der Brückenschaltung ist ähnlich wie die in Figur 1b gezeigten, ersten Brückenschaltung.

Wie in Fig. 1a gezeigt wird, sind auch in der zweiten Brückenschaltung drei Dehnungsmessstreifen auf jeweils unterschiedlichen Messspeichen angeordnet. Hier sind DR32 und DR31 auf Messspeiche 3 angeordnet, wohingegen DR42 auf Messspeiche 4 angeordnet ist und DR21 auf Messspeiche 2 angeordnet ist. Eine Halbbrücke wird aus den Widerständen von DR32 auf Messspeiche 3 mit DR21 auf Messspeiche 2 gebildet, wobei DR21 auf Messspeiche 2 auf der gegenüberliegenden Messspeichenseite von DR32 auf Messspeiche 3 angeordnet ist. Die zweite Halbbrücke wird aus den Widerständen von DR31 auf Messspeiche 3 und DR42 auf Messspeiche 4 gebildet.

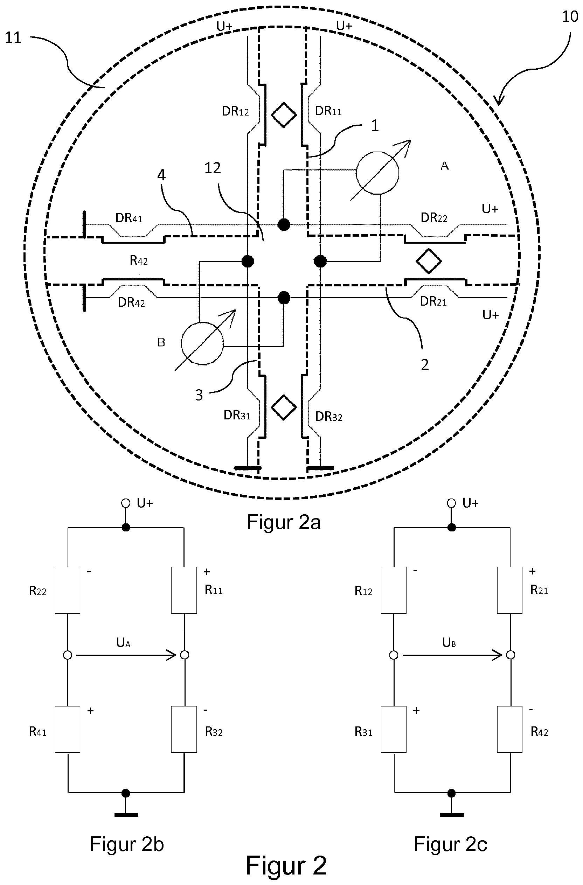

Figur 2a zeigt eine Ansicht einer schematischen Darstellung der Messspeichen mit daran angeordneten Dehnungsmessstreifen und Messgeräten zur Bestimmung der Brückenspannung gemäß einer zweiten Ausführungsform. In der zweiten Ausführungsform sind die zwei Dehnungsmessstreifen DR11, DR32 auf den gegenüberliegenden Messspeichen 1 und 3 zu einer Halbbrücke verschaltet und die zwei Dehnungsmessstreifen DR22, DR41 auf den beiden anderen gegenüberliegenden Messspeichen 2 und 4 zu einer zweiten Halbbrücke verschaltet.

In Figur 2b ist die erste Brückenschaltung gezeigt, welche die erste Brückenspannung U_{A} für einen Kreuzvergleich der Brückenspannungen U_{A}, U_{B} liefert. Wie in Fig. 2b gezeigt, sind in der ersten Brückenschaltung vier Dehnungsmessstreifen auf jeweils unterschiedlichen Messspeichen angeordnet. In der gezeigten Ausführungsform ist DR11 auf Messspeiche 1 angeordnet, DR32 auf Messspeiche 3, DR22 auf Messspeiche 2 und DR41 auf Messspeiche 4.

Eine Halbbrücke wird aus den Widerständen von DR11 auf Messspeiche 1 mit DR32 auf der gegenüberliegenden Messspeiche 3 gebildet. Die zweite Halbbrücke wird aus DR22 auf Messspeiche 2 und DR41 auf Messspeiche 4 gebildet.

Figur 2c zeigt die Verschaltung der zweiten Brückenschaltung, welche die zweite Brückenspannung U_{B} für den Kreuzverglich mit der Brückenspannung der ersten Brückenschaltung U_{A} liefert. Die Verschaltung der Brückenschaltung ist ähnlich wie die in Figur 2b gezeigten, ersten Brückenschaltung.

Wie in Figur 2a gezeigt wird, ist DR21 auf Messspeiche 2 angeordnet, DR42 auf Messspeiche 4, DR12 auf Messspeiche 1 und DR31 auf Messspeiche 3.

Die in Figur 2 gezeigte Ausführungsform, in der alle vier Dehnungsmessstreifen in jeder Brückenschaltung auf unterschiedlichen Speichen 1, 2, 3, 4 des Drehmomentsensors 10 angeordnet sind, hat den Vorteil, dass eine Verformung der Messspeichen abseits der Drehmomentbelastung, wie bereits oben beschrieben durch z.B. Stauchung der Messspeichen, sowie durch an der inneren Messnabe 12 des Drehmomentsensors 10 angreifende Querkräfte, Axialkräfte oder Biegemomente, zum allergrößten Teil ausgeglichen werden, da Dehnungsmessstreifen auf jeder Messspeiche in beiden Brückenschaltungen verschaltet sind. Bei dem anschließenden Kreuzvergleich der beiden Brückenspannungen kann ein "genauerer" und "sichererer" Messwert ermittelt werden. Auch können die Fehlertoleranzen, zum Erkennen, dass ein "echter" Fehler vorliegt, enger gewählt werden.

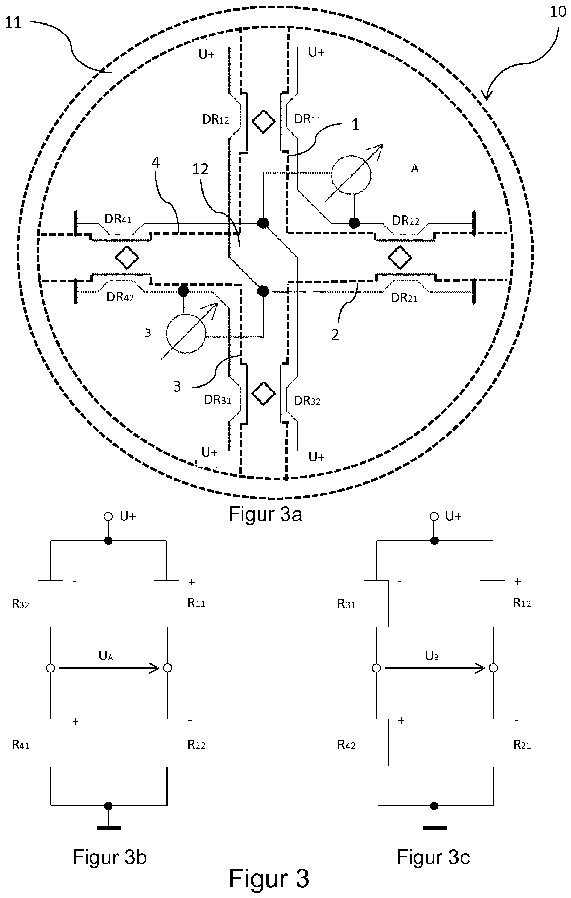

In Figur 3 wird eine schematische Darstellung der Messspeichen 1, 2, 3, 4 mit daran angeordneten Dehnungsmessstreifen und Messgeräten zur Bestimmung der Brückenspannung gemäß einer dritten Ausführungsform gezeigt. Diese Ausführungsform ist eine Alternative zu der in Fig. 2 gezeigten, bei der auch in jeder der mindestens zwei Brückenschaltungen vier Dehnungsmessstreifen auf jeweils unterschiedlichen Messspeichen des Drehmomentsensors 10 angeordnet sind.

Figur 3a zeigt, dass zwei Dehnungsmessstreifen DR11, DR22 auf benachbarten Messspeichen 1, 2 in einer ersten Halbbrücke verschaltet sind und die Widerstände von jeweils zwei Dehnungsmessstreifen DR32, DR41 auf anderen benachbarten Messspeichen 3, 4 in einer zweiten Halbbrücke verschaltet sind.

In Figur 3b ist die erste Brückenschaltung gezeigt, welche die erste Brückenspannung U_{A} für einen Kreuzvergleich der Brückenspannungen U_{A}, U_{B} liefert. Wie in Fig. 3b gezeigt wird, sind in der ersten Brückenschaltung vier Dehnungsmessstreifen auf jeweils unterschiedlichen Messspeichen angeordnet. In der gezeigten Ausführungsform ist DR11 auf Messspeiche 1 angeordnet, DR22 auf Messspeiche 2, DR32 auf Messspeiche 3 und DR41 auf Messspeiche 4.

Eine Halbbrücke wird aus den Widerständen von DR11 auf Messspeiche 1 mit DR22 auf Messspeiche 2 gebildet, wobei DR11 auf Messspeiche 1 auf der gegenüberliegenden Messspeichenseite von DR22 auf Messspeiche 2 angeordnet ist. Anders gesagt: DR11 ist an Messspeiche 1 auf der Seite von Messspeiche 1 angeordnet ist, die der Seite von DR22 gegenüberliegt. Die zweite Halbbrücke wird aus den Widerständen von DR32 auf Messspeiche 3 und DR41 auf Messspeiche 4 gebildet.

Figur 3c zeigt die Verschaltung der zweiten Brückenschaltung, welche die zweite Brückenspannung U_{B} für den Kreuzverglich mit der Brückenspannung der ersten Brückenschaltung U_{A} liefert. Die Verschaltung der Brückenschaltung ist ähnlich der in Figur 3b gezeigten ersten Brückenschaltung.

Wie in Figur 3a gezeigt wird, ist DR12 auf Messspeiche 1 angeordnet, DR21 auf Messspeiche 2, DR31 auf Messspeiche 3 und DR42 auf Messspeiche 4.

Eine Halbbrücke der zweiten Brückenschaltung wird aus den Widerständen von DR12 auf Messspeiche 1 mit DR21 auf Messspeiche 2 gebildet, wobei DR12 auf Messspeiche 1 auf der gegenüberliegenden Messspeichenseite von DR21 auf Messspeiche 2 angeordnet ist. Die zweite Halbbrücke wird aus DR31 auf Messspeiche 3, der DR12 gegenüberliegt, und DR42 auf Messspeiche 4 gebildet, wobei sich DR31 auf der gegenüberliegenden Messspeichenseite von DR42 befindet.

Die in den Figuren 2 und 3 gezeigten Schaltungen, unterscheiden sich im Wesentlichen nur durch die Verschaltung der Dehnungsmesstreifen in den Brückenschaltungen. Beide Figuren zeigen Ausführungsformen in denen jeweils vier Dehnungsmessstreifen auf allen vier Messspeichen angeordnet sind. Eine Entscheidung für oder gegen einer dieser Alternativen ist zum Beispiel abhängig von der Verfügbarkeit der Brückeneinspeisung oder der Masse in dem Schaltungslayout.

## Patentansprüche

1. Drehmomentsensor (10), insbesondere zum Erfassen von an oder in einem Gelenk eines Gelenkarmroboters auftretenden Drehmomenten, aufweisend:
mehrere Messspeichen (1, 2, 3, 4), die ausgestaltet sind sich unter Einwirkung eines Drehmomentes zu verformen; und
mehrere Dehnungsmessstreifen (DR11, DR12, DR21, DR22, DR31, DR32, DR41, DR42), wobei jeweils zwei Dehnungsmessstreifen an zwei gegenüberliegenden Seiten der mehreren Messspeichen (1, 2, 3, 4) angeordnet sind, und wobei mehrere Dehnungsmessstreifen jeweils in einer von mindestens zwei Brückenschaltungen verschaltet sind,
**dadurch gekennzeichnet, dass**
in jeder der mindestens zwei Brückenschaltungen mindestens drei Dehnungsmessstreifen auf jeweils unterschiedlichen Messspeichen (1, 2, 3, 4) angeordnet sind,
wobei jede der mindestens zwei Brückenschaltungen eine Brückenspannung (U_{A}, U_{B}) aufweist und ein sicheres Signal aus einem Kreuzvergleich der Brückenspannungen (U_{A}, U_{B}) der beiden Brückenschaltungen gebildet wird,
wobei der Drehmomentsensor (10) als Speichensensor mit Außenring (11) und Innenring bzw. Nabe (12) ausgebildet ist und die Messspeichen (1, 2, 3, 4) Außenring und Nabe verbinden,
wobei der Drehmomentsensor (10) genau drei oder genau vier Messspeichen aufweist, die im gleichen Winkel um den Innenring bzw. die Nabe (12) angeordnet sind.

2. Drehmomentsensor (10) nach Anspruch 1, wobei jede Brückenschaltung vier Dehnungsmessstreifen hat und die vier Dehnungsmessstreifen in jeder Brückenschaltung auf unterschiedlichen Speichen (1, 2, 3, 4) des Drehmomentsensors (10) angeordnet sind.

3. Drehmomentsensor (10) nach Anspruch 2, wobei zwei Dehnungsmessstreifen (DR11, DR22) auf benachbarten Messspeichen in einer ersten Halbbrücke verschaltet sind und zwei Dehnungsmessstreifen (DR42, DR31) auf anderen benachbarten Messspeichen in einer zweiten Halbbrücke verschaltet sind.

4. Drehmomentsensor (10) nach Anspruch 2, wobei zwei Dehnungsmessstreifen (DR11, DR32) auf gegenüberliegenden Messspeichen jeweils zu einer Halbbrücke verschaltet sind und zwei Dehnungsmessstreifen (DR22, DR41) auf anderen gegenüberliegenden Messspeichen jeweils zu einer zweiten Halbbrücke verschaltet sind.

5. Drehmomentsensor (10) nach Anspruch 1, wobei zwei Dehnungsmessstreifen (DR11, DR22) auf benachbarten Messspeichen in einer ersten Halbbrücke verschaltet sind und zwei Dehnungsmessstreifen (DR12, DR41) auf benachbarten Messspeichen in einer zweiten Halbbrücke verschaltet sind, wobei ein Dehnungsmessstreifen (DR11) der ersten Halbbrücke und ein Dehnungsmessstreifen (DR12) der zweiten Halbbrücke auf derselben Messspeiche angeordnet sind und die beiden anderen Dehnungsmessstreifen (DR22, DR41) auf davon unterschiedlichen Messspeichen angeordnet sind.

6. Drehmomentsensor (10) nach einem der Ansprüche 3 bis 5, wobei die erste Halbbrücke und die zweite Halbbrücke zu einer Brückenschaltung verschaltet sind.

7. Verfahren zum Erfassen von Drehmomenten mit einem Drehmomentsensor (10) nach einem der Ansprüche 1 bis 6, insbesondere zum Erfassen von an oder in einem Gelenk eines Gelenkarmroboters auftretenden Drehmomenten, welches Verfahren aufweist:
Messen eines Drehmoments mit Hilfe der Dehnungsmessstreifen (DR11, DR12, DR21, DR22, DR31, DR32, DR41, DR42) an mehreren Messspeichen (1, 2, 3, 4), wobei jeweils zwei Dehnungsmessstreifen an gegenüberliegenden Seiten von einer der mehreren Messspeichen (1, 2, 3, 4) angeordnet sind; und
Auswerten der von den Dehnungsmessstreifen (DR11, DR12, DR21, DR22, DR31, DR32, DR41, DR42) bereitgestellten Signale mit Hilfe von mindestens zwei Brückenschaltungen, wobei in jeder der mindestens zwei Brückenschaltungen mindestens drei Dehnungsmessstreifen verschaltet sind, die auf unterschiedlichen Messspeichen (1, 2, 3, 4) angeordnet sind.

8. Gelenkarmroboter mit mindestens einem Roboterarm, der über ein Gelenk beweglich an einem anderen Bauteil des Roboters angeordnet ist, **dadurch gekennzeichnet, dass** der Roboter einen Drehmomentsensor (10) gemäß einem der Ansprüche 1 bis 6 umfasst, zum Erfassen von an oder in dem Gelenk auftretenden Drehmomenten.

## Claims

1. A torque sensor (10), in particular for detecting torques occurring on or in a joint of an articulated-arm robot, comprising:
several measuring spokes (1, 2, 3, 4), that are designed to deform under the effects of torque; and
several strain gauges (DR11, DR12, DR21, DR22, DR31, DR32, DR41, DR42), with two strain gauges being arranged on two opposite sides of the several measuring spokes (1, 2, 3, 4), and with several strain gauges each being connected in one of at least two bridge circuits,
**characterized in that**
in each of the at least two bridge circuits at least three strain gauges are arranged on different measuring spokes (1, 2, 3, 4), wherein each of the at least two bridge circuits has a bridge voltage (U_{A}, U_{B}) and a reliable signal is formed from a cross-comparison of the bridge voltages (U_{A}, U_{B}) of the two bridge circuits,
wherein the torque sensor (10) is formed as a spoke sensor with an outer ring (11) and an inner ring or hub (12) and the measuring spokes (1, 2, 3, 4) connect the outer ring and the hub,
wherein the torque sensor (10) has exactly three or exactly four measuring spokes, which are arranged at the same angle about the inner ring or the hub (12).

2. The torque sensor (10) according to Claim 1, wherein each bridge circuit has four strain gauges and the four strain gauges in each bridge circuit are arranged on different spokes (1, 2, 3, 4) of the torque sensor.

3. The torque sensor (10) according to Claim 2, wherein two strain gauges (DR11, DR22) on adjacent measuring spokes are connected in a first half bridge and two strain gauges (DR42, DR31) on other adjacent measuring spokes are connected in a second half bridge.

4. The torque sensor (10) according to Claim 2, wherein two strain gauges (DR11, DR32) on opposite measuring spokes are connected to form a half bridge and two strain gauges (DR22, DR41) on other opposite measuring spokes are connected to form a second half bridge.

5. The torque sensor (10) according to Claim 1, wherein two strain gauges (DR11, DR22) on adjacent measuring spokes are connected in a first half bridge and two strain gauges (DR12, DR41) on adjacent measuring spokes are connected in a second half bridge, with one strain gauge (DR11) of the first half bridge and one strain gauge (DR12) of the second half bridge being arranged on the same measuring spoke and the two other strain gauges (DR22, DR41) being arranged on measuring spokes different from this measuring spoke.

6. The torque sensor (10) according to one of Claims 3 through 5, wherein the first half bridge and the second half bridge are connected to form a bridge circuit.

7. A method for detecting torques with a torque sensor (10) according to one of Claims 1 through 6, in particular for detecting torques occurring on or in a joint of an articulated-arm robot, which method comprises:
measurement of a torque with the aid of the strain gauges (DR11, DR12, DR21, DR22, DR31, DR32, DR41, DR42) on several measuring spokes (1, 2, 3, 4), with two strain gauges being arranged on opposite sides of one of the several measuring spokes (1, 2, 3, 4); and
evaluation of the signals provided by the strain gauges (DR11, DR12, DR21, DR22, DR31, DR32, DR41, DR42) with the aid of at least two bridge circuits, with at least three strain gauges being connected in each of the at least two bridge circuits, which strain gauges are arranged on different measuring spokes (1, 2, 3, 4).

8. An articulated-arm robot with at least one robot arm, which is arranged mobile due to a joint on another component of the robot, **characterized in that** the robot comprises a torque sensor (10) according to one of Claims 1 through 6 for detecting torques occurring on or in the joint.

## Revendications

1. Capteur de couple (10), en particulier pour la détection de couples apparaissant sur ou dans une articulation d'un robot à bras articulés, comprenant :
plusieurs rayons de mesure (1, 2, 3, 4), agencés pour se déformer sous l'action d'un couple ; et
plusieurs jauges extensométriques (DR₁₁, DR₁₂, DR₂₁, DR₂₂, DR₃₁, DR₃₂, DR₄₁, DR₄₂), deux jauges extensométriques étant disposées sur deux côtés opposés de chacun des plusieurs rayons de mesure (1, 2, 3, 4), plusieurs jauges extensométriques étant interconnectées, chacune selon l'un d'au moins deux montages en pont,
**caractérisé en ce que**
dans chacun des au moins deux montages en pont, au moins trois jauges extensométriques sont disposées chacune sur des rayons de mesure différents (1, 2, 3, 4),
chacun des au moins deux montages en pont présentant une tension de pont (U_{A}, U_{B}), et un signal sûr étant formé sous l'effet d'une comparaison croisée des tensions de pont (U_{A}, U_{B}) des deux montages en pont,
le capteur de couple (10) étant configuré comme un capteur de rayon, comportant un anneau extérieur (11) et un anneau intérieur ou moyeu (12), et les rayons de mesure (1, 2, 3, 4) reliant l'anneau extérieur et le moyeu,
le capteur de couple (10) présentant exactement trois ou exactement quatre rayons de mesure, qui sont disposés d'une manière équi-angulaire autour de l'anneau intérieur ou du moyeu (12).

2. Capteur de couple (10) selon la revendication 1, dans lequel chaque montage en pont possède quatre jauges extensométriques, et les quatre jauges extensométriques sont, dans chaque montage en pont, disposées sur des rayons différents (1, 2, 3, 4) du capteur de couple (10).

3. Capteur de couple (10) selon la revendication 2, dans lequel deux jauges extensométriques (DR₁₁, DR₂₂) se trouvant sur des rayons de mesure voisins sont interconnectées dans un premier demi-pont, et deux jauges extensométriques (DR₄₂, DR₄₃) se trouvant sur d'autres rayons de mesure voisins sont interconnectées dans un deuxième demi-pont.

4. Capteur de couple (10) selon la revendication 2, dans lequel deux jauges extensométriques (DR₁₁, DR₃₂) se trouvant sur des rayons de mesure opposés sont chacune interconnectées pour former un demi-pont, et deux jauges extensométriques (DR₂₂, DR₄₁) se trouvant sur d'autres rayons de mesure opposés sont chacune interconnectées pour former un deuxième demi-pont.

5. Capteur de couple (10) selon la revendication 1, **caractérisé en ce que** deux jauges extensométriques (DR₁₁, DR₂₂) se trouvant sur des rayons de mesure voisins sont interconnectées dans un premier demi-pont et deux jauges extensométriques (DR₁₂, DR₄₁) se trouvant sur des rayons de mesure voisins sont interconnectées dans un deuxième demi-pont, une jauge extensométrique (DR₁₁) du premier demi-pont et une jauge extensométrique (DR₁₂) du deuxième demi-pont étant disposées sur le même rayon de mesure, et les deux autres jauges extensométriques (DR₂₂, DR₄₁) étant disposées sur des rayons de mesure qui en sont différents.

6. Capteur de couple (10) selon l'un des revendications 3 à 5, le premier demi-pont et le deuxième demi-pont étant interconnectés pour former un montage en pont.

7. Procédé pour la détection de couples à l'aide d'un capteur de couple (10) selon l'une des revendications 1 à 6, en particulier pour la détection de couples apparaissant sur ou dans une articulation d'un robot à bras articulés, ce procédé comportant
la mesure d'un couple à l'aide des jauges extensométriques (DR₁₁, DR₁₂, DR₂₁, DR₂₂, DR₃₁, DR₃₂, DR₄₁, DR₄₂) sur plusieurs rayons de mesure (1, 2, 3, 4), deux jauges extensométriques étant disposées sur chacun des côtés opposés de l'un des plusieurs rayons de mesure (1, 2, 3, 4), et
l'évaluation des signaux fournis par les jauges extensométriques (DR₁₁, DR₁₂, DR₂₁, DR₂₂, DR₃₁, DR₃₂, DR₄₁, DR₄₂) à l'aide d'au moins deux montages en pont, au moins trois jauges extensométriques, qui sont disposées sur différents rayons de mesure (1, 2, 3, 4), étant interconnectées dans chacun des au moins deux montages en pont.

8. Robot à bras articulés comportant au moins un bras robotisé, qui est disposé d'une manière mobile par l'intermédiaire d'une articulation sur un autre composant du robot, **caractérisé en ce que** le robot comprend un capteur de couple (10) selon l'une des revendications 1 à 6, pour détecter des couples apparaissant sur ou dans l'articulation.
